# EUROPEAN PATENT APPLICATION

(11) **EP 2 595 403 A1**
(43) Date of publication of application: **22.05.2013**
(21) Application number: 11189314.5
(22) Date of filing: 16.11.2011
(51) Int. Cl.: H04N 21/433, H04N 21/4147, H04N 21/2747, H04N 21/414, H04N 21/472

(54) **Method for providing video content to a user**

(71) Applicant: Kabel Deutschland Vertrieb und Service GmbH, 85774 Unterföhring (DE)
(72) Inventor: Constant, Christian, 85774 Unterföhring (DE); Hanebuth, Julia, 85774 Unterföhring (DE); Künkel, Tobias, 85774 Unterföhring (DE); Hirsch, Christina, 85774 Unterföhring (DE)
(74) Representative: Eisenführ, Speiser & Partner

(57) **Abstract**

In a method for providing video content to a user, a video content provided by a video content source is selected and recorded. For the recording the video content source is accessed, the selected video content is stored in a video content storage means of a video recording device and the selected video content is stored in a central storage means being accessible by a computer client for providing video content to the computer client.

## Description

The present invention relates to a method, a video recording device and a system for providing video content, in particular video-on-demand content and/or television programs, to a user. The term video recording device in the context of the present invention refers to a personal video recorder (PVR) and/or digital video recorder (DVR). The term video-on-demand (VOD) content in the context of the present invention refers to content such as audio and video material which can be selected and viewed by a user on demand. The term television program in the context of the present invention refers to content provided by television broadcasting stations.

Methods for providing video content to a user and video recording devices are generally known in the art. Video-on-demand systems, e.g. in the combination with a TV set, either stream content via a set-top box (STB), allowing the user to view the content in real time, or download content to a device such as a computer client, digital video recorder, personal video recorder, or mobile client for viewing at a later time. Many television providers offer video-on-demand streaming, such as pay-per-view, whereby a user buys or selects a movie or television program and, consequently, the television set reproduces or plays the content almost instantaneously. Furthermore, many television providers offer downloading content to a digital video recorder for renting the content from the provider or for downloading to own the content for viewing in the future.

EP 2 071 835 B1 describes a method for storing and accessing of recordings of television programs and for remote reproducing of recorded television programs, which are recorded by a personal video recorder. The personal video recorder is connectable to a server using a first communication channel and having access to a video-on-demand store of all recent programs. Via the first communication channel a data set of recording information about a program recorded in the personal video recorder with the identity of the recorded program is transferred to the server and stored into a data base by the server using a storage mechanism. A list of stored data sets is available from the database by a mobile equipment via a second communication channel. The list is displayed by the mobile equipment as a page to represent an electronic program guide of the stored data sets. A program can be chosen from the electronic program guide. This selection is then indicated back to the server. The server accesses the central video-on-demand store and begins to play a stream of the selected program from the video-on-demand store to the specific mobile equipment which has chosen the selected program.

It is an object of the present invention to provide an improved method for providing video content to a user. It is a further object of the present invention to provide an improved video recording device for providing video content to a user. It is an even further object of the invention to provide an improved system for providing video content to a user.

The above-mentioned object is achieved by a method for providing video content, in particular video-on-demand content and/or television programs to a user, comprising the steps:
a) selecting a video content provided by a video content source,
b) recording the selected video content by accessing the video content source, storing the selected video content in a video content storage means of a video recording device and storing the selected video content in a central storage means being accessible by a computer client for providing video content to the computer client.

The inventor has discovered that the methods for storing and accessing of recordings of television programs according to the state of the art store the video content either in a video recording device located in a home environment or alternatively in a central server. In the first mentioned alternative of storing the video content in the video recording device, a user may want to access the video content via a computer client over an internet connection. In such a case, the video content needs to be transcoded to a format, e.g. a compressed format, being suitable for streaming and viewing the video content on the computer client. In the latter mentioned alternative of storing the video content on a central server, the video content needs to be transferred to the video recording device for viewing in a home environment. Therefore, according to the state of the art, the video content is stored on the central server in a compressed format. I.e. high quality reproduction of the video content in a home environment is not possible.

The present invention provides an enhanced method for providing video content such as video-on-demand content and television programs to a user. This is achieved by storing the selected video content both in the video content storage means of the video recording device and in the central storage means, i.e. two physical copies are stored separately. If the video content is provided to the user via the video recording device, which can be connected to or part of a TV set, the video content is accessed from the video content storage means of the video recording device. If the video content is provided to the user via a computer client, said computer client accesses the central storage means for accessing and reproducing the selected video content. In other words, in a home environment, the user accesses the video content stored in the video content storage means of the video recording device for viewing the video content, e.g., on a TV set. However, if the user resides outside his or her home environment, for example on a trip away from home, and desires to access the video content recorded by the video recording device, he or she may use a computer client accessing the central storage means and, thereby, accessing the stored selected video content for playing or reproducing the video content on the computer client, respectively. The reproducing may preferably take place by streaming the video content to the computer client or downloading the video content to the computer client.

Preferably, the video content is stored in the central storage means in a compressed format being suitable for streaming or downloading the video content over an internet connection such as MPEG-1, MPEG-2. MPEG-3, MPEG-4, Windows Media Video, real video, flash video streaming, QuickTime, H.264, etc.. Further preferably, the content is stored in the video content storage means of the video recording device in a format suitable for playing the video content on a TV set in a quality fitting the TV set properties in an appropriate way. Suitable video formats for storing in the video storage means are, for example, HuffYUV, CorePNG, LCL-Codec, Lagarith, FFV1, MSU Lossless, AZW, etc.. Thereby, the provision of video content is adapted to the respective way of accessing the video content and to the way of reproducing the video content. Since a computer client accesses the video content from the central storage means preferably via an internet connection providing only a limited data transfer per unit time, it is of advantage if the content stored in the central storage means is stored in a format being suitable for transfer over an internet connection. Furthermore, the term computer client in the context of the present invention can be understood as a mobile device such as a mobile phone or smart phone having only a limited display size and, therefore, high resolution displaying of video content is not necessary and ineffective. It is therefore of advantage to store the video content in a central storage means in a format suitable also for mobile devices such as mobile phones or smart phones. As described above, the video content is stored in form of two separate copies with different formats, wherein each format is suitable for the respective transmission and/or reproduction. In contrast to the methods according to the state of the art, a transcoding of the video content into a different format is not necessary anymore or only necessary in certain situations.

The central storage means can be a network based server providing user specific storage regions or memory areas. I.e. a plurality of users may access their user specific storage regions on the central storage means for accessing the stored video content. In each storage region, the video content that has been selected by a certain user for recording is stored.

In the context of the present invention, two alternatives for transferring video content from the video content source to the central storage means are possible. In a first embodiment, the video recording device receives the video content from the video content source for storing and then transfers the video content to the central storage means where the video content is stored also. In a second embodiment, prior to recording, the video recording device sends a signal to the central storage means relating to a recording to be executed. The central storage means then receives the video content to be recorded directly from the video content source and stores the received video content.

According to a first preferred embodiment of the method according to the present invention the selecting is executed via a user input means, preferably as part of the video recording device, via a website and/or application software being accessible by a computer client or mobile phone. Thereby, a plurality of different ways is provided for selecting a video content. Preferably, the user may select a video content via a user input means being part of the video recording device, for example, by use of a user menu provided by the video recording device which is displayed on the television screen. Alternatively, the user may select video content to be recorded via a website providing a user input menu for selecting video content. In a further alternative, the user may select a video content via an application software (so called App) which can be executed by a mobile device such as a smart phone. The term computer client in the context of the present invention can be understood as a personal computer, a tablet personal computer, a cellular telephone, a camera, a smart phone, a media player, a navigation device, a game console, or a laptop computer. The computer client may access the user input means via an internet connection or by a cable connection, e.g. local area network (LAN) connection to the video recording device.

According to a further preferred embodiment of the method according to the present invention, prior to recording a selected video content, a booking of the recording is executed via a user input means, preferably a user input means as part of the video recording device or a user input means as part of a website and/or application software being accessible by a computer client or mobile phone. The term booking in the context of the present invention can be understood as an electronic tag for the reservation of a recording to be executed in the future. This allows the user to book a recording in advance so that the recording is executed automatically at the time, when the video content, e.g. a television program, is broadcasted or at a time point, when traffic conditions of the internet connection are convenient for downloading the video content. The latter can be of advantage in environments with limited data transfer volume. In this case the recording is executed in form of a download via an internet connection when the data traffic is convenient for downloading the video content.

In a preferred embodiment of the method according to the present invention the accessing is executed via a DVB receiver means, in particular a DVB-T receiver, DVB-C receiver and/or DVB-S receiver, or via an internet access means. Thereby, a plurality of different access means for accessing the video content source is provided to the user. Preferably, the selecting of video content is executed by accessing the website mentioned above via an internet connection, wherein the accessing and transferring of the content is executed via DVB transmission to the respective device, e.g. TV set, for reproducing the video content.

In a further advantageous embodiment of the method according to the present invention additional information concerning the stored selected video content is stored in the video content storage means and in the central storage means, in particular information on free storage space, booking information, recording information, information on bookmarked selected video content, information on user preferences, information on user behaviour, and information on deletion of recordings and bookings. This provides additional information to the user for handling and organizing the recording of video content. The information on free storage space helps the user to decide whether a recording can be stored. Furthermore, it helps to decide whether video content recorded beforehand needs to be deleted from the storage space. By automatically analyzing the information on user behaviour, further video content that could be of interest to the user can be provided to the user in form of advertisements or the like for future recording. According to a preferred embodiment of this method a modification of the additional information stored in the video content storage means is transferred to the central storage means and a modification of the additional information stored in the central storage means is transferred to the video content storage means. The transferring may take place periodically or each time a user accesses the central storage means or each time the user switches on the video recording device. The transferring of modifications in the mentioned additional information provides for a two-way synchronization of additional information concerning the stored selected video content.

The term free storage space in the context of the present invention can be understood as the present status of free space on a hard disk drive (HDD) in the central storage means. By the method described above it is possible for a user to see the status of the hard disk drive capacity and the point in time when the status was checked last.

Furthermore, an update of the HDD capacity status can be provided to the user on request. Even further, an alert may be provided via email or mobile message systems in case the HDD capacity is below a certain limit. An error message may be provided to the user in case the central storage means or the video recording device cannot be reached.

Furthermore, the method described above allows a user to see all bookings via a computer client or the video recording device. It is further possible to delete single recordings and bookings via a computer client accessing the central storage means or via a video recording device. Even further it can be possible to format the hard disk drive of the central storage means and/or the video recording device. User preferences, such as favourite video content lists are accessible from the central storage means and/or the video recording device. Furthermore, a history of recordings, bookings and viewing of video content can be provided to the user via the central storage means or the video content storage means of the video recording device. Further additional information concerning the stored selected video content can be, e.g., personal identification management information, searching information, search result history, search keyword history, bookmarked content, play lists, stop/start point handover, information on promotion content, information on synchronization settings, etc..

A further aspect of the invention is provided by one or more computer-readable media having computer readable instructions thereon which, when executed by one or more processors, cause the processor to implement the above described method. The term computer-readable can be understood as an electronic memory media such as a volatile memory, i.e. a semiconductor memory requiring power to maintain the stored information, or a non-volatile memory, i.e. a semiconductor memory that can retain the stored information even when not provided with power. The term processor can be understood as a micro processor containing a central processing unit (CPU) of a computer on an integrated circuit.

A further aspect of the invention is a video recording device for providing video content, in particular video-on-demand content and/or television programs, to a user comprising: a video receiving means for accessing video content from a video content source, a video content storage means for storing a selected video content, and an internet access means for accessing a central storage means, wherein a user input means is adapted to select video content being receivable from the video content source, and wherein said central storage means comprises an internet access means for accessing the video content storage means, said central storage means is accessible by a computer client and said central storage means is adapted to store the selected video content.

Thereby, an enhanced video recording device for providing video content to a user is achieved, in which a physical copy of the selected video content may be stored not only in the video content storage means of the video recording device but also in the central storage means. A user may access the stored video content, for example, via a computer client having access to the central storage means. Preferably, the content is stored in the central storage means in a format suitable for downloading or streaming via a computer client and suitable for viewing the video content on a mobile device such as a smart phone. Preferably, the internet access means can be provided via Asymmetric Digital Subscriber Line (ADSL), internet over cable television lines, mobile broadband such as General Packet Radio Service (GPRS), Enhanced Data Rates for GSM Evolution (EDGE; GSM: Global System for Mobile Communications), etc., or satellite internet. Further preferably, the computer client accesses the central storage means via an internet access means.

Preferably, the video recording device accesses the video content from the video content source and transfers the video content to the central storage means for storing. Further preferably, the central storage means may comprise a video receiving means for directly accessing the selected video content from the video content source. In this case, prior to recording, the video recording device sends a signal to the central storage means relating to a recording to be executed. The central storage means then receives the video content to be recorded directly from the video content source and stores the received video content.

Further preferably, the video recording device may be adapted to access the stored selected video content from the central storage means, e.g., via said internet access means.

According to a preferred embodiment of the video recording device according to the present invention the video receiving means is a DVB receiver, in particular a DVB-T receiver, DVB-C receiver and/or DVB-S receiver, or an internet access means.

In a further preferred embodiment of the video recording device according to the present invention the video recording device is an integral part of a computer client or a set-top box. The term set-top box in the context of the present invention can be understood as a device that contains a tuner connecting a television set to the video content source, for example, provided by an external signal which transfers the content to be displayed on the television screen or other display device.

In a further preferred embodiment of the video recording device according to the present invention the computer client is a desk top personal computer, tablet personal computer, a smart phone or a notebook computer.

In a further preferred embodiment of the video recording device according to the present invention the user input means is part of the video recording device or the user input means is a website being accessible by a computer or mobile client, in particular via an internet connection. According to another preferred embodiment of the video recording device according to the present invention, the central storage means is a network based server, in particular a web server. Thereby, a purposeful way of achieving a central storage means being accessible via internet is provided to the user. The server can be operated by a provider of video content or by a service provider providing a service in connection with a video recording device. The server can also be operated and provided by the video recording device manufacturer.

In a further preferred embodiment of the recording device according to the present invention the video recording device and the central storage means are adapted to store additional information concerning the stored selected video content, in particular information on free storage space, booking information, recording information, information on bookmarked selected video content, information on user preferences, information on user behaviour, and information on deletion of recordings and bookings. In a further preferred embodiment the video recording device is adapted to transfer a modification of the additional information stored in the video recording device to the central storage means and the central storage means is adapted to transfer a modification of the additional information stored in the central storage means to the video recording device.

A further aspect of the present invention is a system for providing video content, in particular video-on-demand content and/or television programs to a user comprising: a video recording device comprising a video receiving means for accessing video content from a video content source, a video content storage means for storing a selected video content, and an internet access means for accessing a central storage means, and a user input means for selecting video content being receivable from the video content source, wherein said central storage means comprises an internet access means for accessing the video content storage means, said central storage means is accessible by a computer client, in particular via an internet connection, and said central storage means is adapted to store the selected video content.

In the following, preferred embodiments of the present invention will be discussed with reference to the following figures:
Fig. 1 shows an embodiment of a method according to the present invention.
Fig. 2 shows a first embodiment of a system according to the present invention.
Fig. 3 shows a second embodiment of a system according to the present invention.

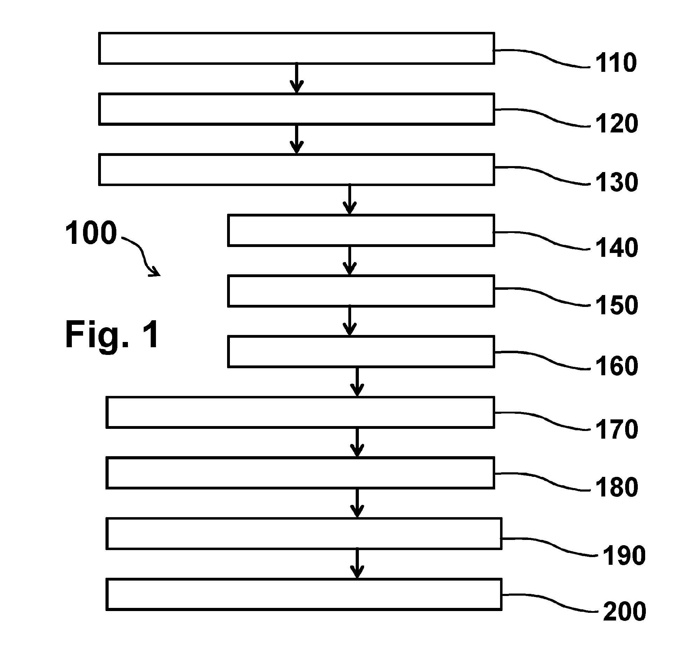

Fig. 1 illustrates a flow diagram of an example process 100 for providing video content to a user. Process 100 will be described in reference to a system for implementing process 100.

In a first process step 110, a user selects a video content provided by a video content source. The user may select the video content via a user input means which can be part of a video recording device or as part of a website being accessible by a computer client. The information concerning the video content to be selected can be shown to the user via an electronic program guide (EPG). In case of video content in form of television programs the EPG may provide information to the user concerning broadcasting times, subject-matter of the video content, and further additional information concerning the video content to be selected. The video content source may be provided by a broadcasting station for providing video content in form of television programs. Furthermore, the video content source may be provided by a video-on-demand provider which operates a server on which all video content to be selected is stored.

In a further process step 120 the user books via a user input means a recording of a selected video content to be executed. Thereby, the recording can be initiated automatically at a selected time point or at a time point being suitable for recording. Such a time point can be the actual broadcasting time of a television program or a time interval in which a recording of a video-on-demand content is preferred, for example, with respect to data transfer conditions.

In another process step 130 the selected video content is recorded by the following recording steps. In a first recording step 140 the video recording device accesses the video content source. Therefore, the video content is transferred from the video content source to the video recording device, e.g., via an internet connection. The accessing and transferring can also be executed via a DVB receiver means, in particular a DVB-T receiver, DVB-C receiver and/or DVB-S receiver. In a further recording step 150 the selected and accessed video content is stored in a video content storage means of the video recording device. The video content can be stored in a format being suitable for reproducing the video content on a television set connected to the video recording device. In another recording step 160 the selected and accessed video content is stored in a central storage means in form of a network based server (i.e. web server). Therefore, preferably, the video content accessed by the video recording device from the video content source is transferred from the video recording device to the central storage means. Alternatively, the central storage means receives the video content directly from the video content source and stores the received selected video content.

The central storage means is accessible by a computer client and, thereby, video content stored in the central storage means can be provided to the computer client. I.e. a user may use a computer client to access the central storage means, i.e. via an internet connection, and for streaming or downloading the video content to the computer client. Thereby, the video content can be reproduced on the computer client for viewing. Preferably, the video content is stored in the central storage means in a format being suitable for reproducing it on a computer client and being suitable for transferring the video content via an internet connection from the central storage means to the computer client.

In a further process step 170 additional information concerning the stored selected video content is stored in the video content storage means. Such additional information can be information on free storage space in the video content storage means or free storage space in the central storage means. Such additional information can also be booking information on future recordings to be executed by the video recording device. Even further such additional information can be recording information such as recording times and information on recorded content with respect to recordings that have been executed in the past. In another process step 180, additional information concerning the stored selected video content is stored in the central storage means.

In another process step 190, a modification of the additional information stored in the video content storage means is transferred to the central storage means.

In a further process step 200, a modification of the additional information stored in the central storage means is transferred to the video content storage means. The transferring in the process steps 190 and/or 200 can be executed periodically, e.g. at a certain time point each day, each time the video recording device is switched on, each time a user accesses the central storage means via a computer client or each time the user initiates a transferring of the additional information between the central storage means and the video content storage means.

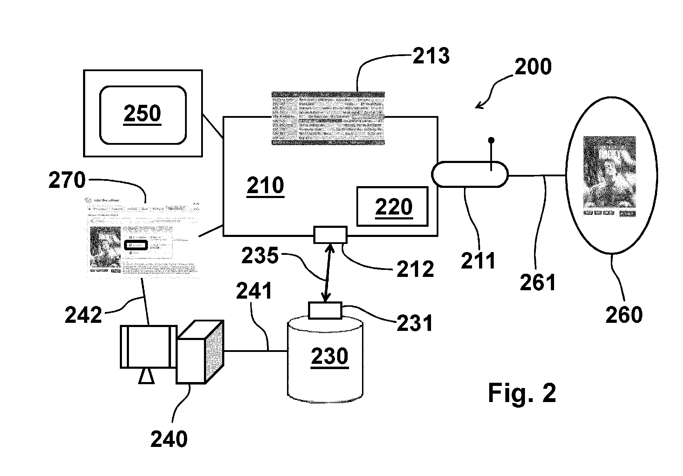

Fig. 2 illustrates a system for providing video content to a user as described in Fig. 1. The system comprises a video recording device 210 with a video receiving means 211 for accessing and/or receiving video content from a video content source 260. The video content source 260 may provide the video content to the video recording device 210 via an internet connection 261 or via DVB. The video recording device 210 is connected to a television set 250, wherein the television set 250 can be used for displaying the video content stored in a video content storage means 220 as part of the video recording device 210.

An internet access means 212 can be used for accessing a central storage means 230. The central storage means 230 can be a network based server, e.g. a web server. The central storage means contains an internet access means 231 for accessing the video content storage means 220. The selected and stored video content can be transferred from the video content storage means 220 to the central storage means 230 via an internet connection 235. Thereby, the video content can be stored in the central storage means 230, preferably in a format being suitable for transferring the video content to a computer client 240 via an internet connection 241 or via DVB transmission. The computer client 240 may access the central storage means 230 for accessing the video content stored in the central storage means 230. The computer client 240 may further be adapted to reproduce and display the video content accessed from the central storage means 230. The computer client may be a desk top personal computer, tablet personal computer, a smart phone or a notebook computer.

The video recording device 210 comprises a user input means 213 by which the user may select a video content to be recorded or access additional information stored in the video content storage means. Furthermore, the user may select a video content to be recorded or access additional information stored in the video content storage means via a website 270. The website 270 can be accessed by use of the computer client 240 via an internet connection 242.

Said additional information can be information concerning the stored selected video content, for example, information on free storage space, booking information, recording information, information on bookmarked selected video content, information on user preferences, information on user behaviour and information on deletion of recordings and bookings.

The video recording device 210 may transfer a modification of the additional information stored in the video content storage means 220 to the central storage means 230. The modification of the additional information is then stored in the central storage means 230, for example, by updating the respective information in the central storage means 230. Furthermore, the central storage means 230 may transfer a modification in the additional information stored in the central storage means 230 to the video content storage means 220 via the internet connection 235. The transferred modification can be stored in the video content storage means 220, for example, by updating the specific information in the video content storage means.

A user may use a computer client 240 to access video content stored in the central storage means 230 via an internet connection 241. The accessed video content can then be reproduced on the computer client 240, i.e. for viewing the video content.

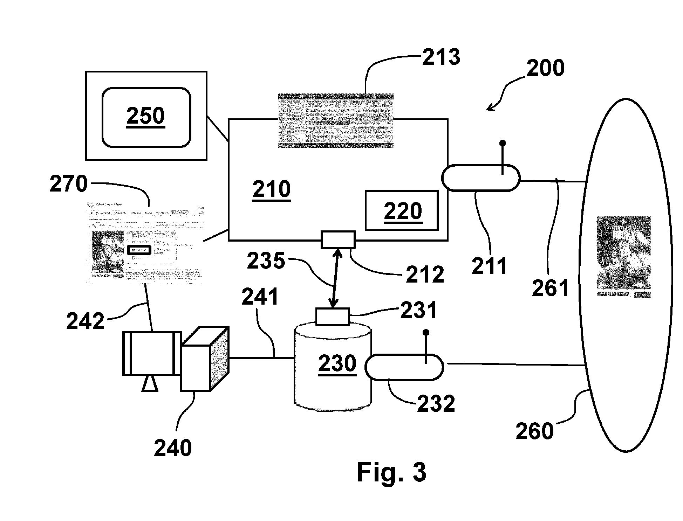

Fig. 3 illustrates a second embodiment of a system for providing video content to a user. The system illustrated in Fig. 3 contains all features having been described with respect to the system illustrated in Fig. 2. Equal or similar features are referenced with the same reference signs. In addition to the features described above, the central storage means 230 illustrated in Fig. 3 comprises a video receiving means 232 for accessing and/or receiving video content from the video content source 260. Prior to recording, the video recording device 210 may send a signal via internet connection 235 to the central storage means 230 relating to a recording to be executed in the future. When the recording is executed, the central storage means 230 receives via video receiving means 232 the video content to be stored directly from the video content source 260. In this embodiment the selected and stored video content does not need to be transferred from the video content storage means 220 to the central storage means 230 via internet connection 235.

## Claims

1. Method for providing video content, in particular video-on-demand content and/or television programs, to a user, comprising the steps:
a) selecting (110) a video content provided by a video content source (260),
b) recording (130) the selected video content by
o accessing (140) the video content source (260),
o storing (150) the selected video content in a video content storage means (220) of a video recording device (210) and
o storing (160) the selected video content in a central storage means (230) being accessible by a computer client (240) for providing video content to the computer client (240).

2. Method according to claim 1,
wherein the selecting is executed via a user input means (213), preferably as part of the video recording device (210), via a website (270) and/or application software being accessible by a computer client (240) or mobile phone.

3. Method according to claims 1 or 2,
wherein prior to recording a selected video content a booking (120) of the recording is executed via a user input means (213), preferably a user input means (213) as part of the video recording device (210) or a user input means as part of a website and/or application software being accessible by a computer client (240) or mobile phone.

4. Method according to any of the preceding claims 1, 2 or 3,
wherein the accessing is executed via a DVB receiver means (211), in particular a DVB-T receiver, DVB-C receiver and/or DVB-S receiver, or via an internet access means.

5. Method according to any of the preceding claims,
wherein additional information concerning the stored selected video content is stored in the video content storage means (220) and in the central storage means (230), in particular information on free storage space, booking information, recording information, information on bookmarked selected video content, information on user preferences, information on user behavior, and information on deletion of recordings and bookings.

6. Method according to claim 5,
wherein a modification of the additional information stored in the video content storage means (220) is transferred to the central storage means (230) and
wherein a modification of the additional information stored in the central storage means (230) is transferred to the video content storage means (220).

7. One or more computer-readable media having computer readable instructions thereon which, when executed by one or more processors, cause the processor to implement the method according to claims 1-6.

8. Video recording device for providing video content, in particular video-on-demand content and/or television programs, to a user comprising:
- a video receiving means (211) for accessing video content from a video content source (260),
- a video content storage means (220) for storing a selected video content, and
- an internet access means (212) for accessing a central storage means (230),
wherein a user input means (213) is adapted to select video content being receivable from the video content source (260), and
wherein said central storage means (230) comprises an internet access means (231) for accessing the video content storage means (220), said central storage means (230) is accessible by a computer client (240) and said central storage means (230) is adapted to store the selected video content.

9. Video recording device according to claim 8,
wherein the video receiving means (211) is a DVB receiver, in particular a DVB-T receiver, DVB-C receiver and/or DVB-S receiver, or an internet access means.

10. Video recording device according to claims 8 or 9,
wherein the video recording device (210) is an integral part of a computer client or a set-top box.

11. Video recording device according to any of the preceding claims 8-10,
wherein the computer client (240) is a desktop personal computer, tablet personal computer, a smart phone or a notebook computer.

12. Video recording device according to any of the preceding claims 8-11,
wherein the user input means (213) is part of the video recording device (210) or the user input means is a website (270) being accessible by a computer and/or mobile client, in particular via an internet connection.

13. Video recording device according to any of the preceding claims 8-12,
wherein the central storage means (230) is a network based server, particularly a web server.

14. Video recording device according to any of the preceding claims 8-13,
wherein the video recording device (210) and the central storage means (230) are adapted to store additional information concerning the stored selected video content, in particular information on free storage space, booking information, recording information, information on bookmarked selected video content, information on user preferences, information on user behavior, and information on deletion of recordings and bookings.

15. Video recording device according to claim 14,
wherein the video recording device (210) is adapted to transfer a modification of the additional information stored in the video recording device (210) to the central storage means (230) and
wherein the central storage means (230) is adapted to transfer a modification in the additional information stored in the central storage means (230) to the video recording device (210).

16. System for providing video content, in particular video-on-demand content and/or television programs, to a user comprising:
- a video recording device (210) comprising
o a video receiving means (211) for accessing video content from a video content source (260),
o a video content storage means (220) for storing a selected video content, and
o an internet access means (212) for accessing a central storage means (230),
and
- a user input means (212) for selecting video content being receivable from the video content source (260),
- wherein said central storage means (230) comprises an internet access means (231) for accessing the video content storage means (220), said central storage means (230) is accessible by a computer client (240), in particular via an internet connection (241), and said central storage means (230) is adapted to store the selected video content.

## Amended claims

### Amended claims in accordance with Rule 137(2) EPC.

**1.** Method for providing video content to a user, comprising the steps:
a) selecting (110) a video content provided by a video content source (260),
b) recording (130) the selected video content by
o accessing (140) the video content source (260),
o storing (150) the selected video content in a video content storage means (220) of a video recording device (210) and
o storing (160) the selected video content in a central storage means (230) being accessible by a computer client (240) for providing video content to the computer client (240),
wherein storing the selected video content in the video storage means (220) of the recording device is performed in parallel to storing the selected video content in the central storage means.

**2.** Method according to claim 1,
wherein the selecting is executed via a user input means (213), preferably as part of the video recording device (210), via a website (270) and/or application software being accessible by a computer client (240) or mobile phone.

**3.** Method according to claims 1 or 2,
wherein prior to recording a selected video content a booking (120) of the recording is executed via a user input means (213), preferably a user input means (213) as part of the video recording device (210) or a user input means as part of a website and/or application software being accessible by a computer client (240) or mobile phone.

**4.** Method according to any of the preceding claims 1, 2 or 3,
wherein the accessing is executed via a DVB receiver means (211) or via an internet access means.

**5.** Method according to any of the preceding claims,
wherein additional information concerning the stored selected video content is stored in the video content storage means (220) and in the central storage means (230), in particular information on free storage space, booking information, recording information, information on bookmarked selected video content, information on user preferences, information on user behavior, and information on deletion of recordings and bookings.

**6.** Method according to claim 5,
wherein a modification of the additional information stored in the video content storage means (220) is transferred to the central storage means (230) and wherein a modification of the additional information stored in the central storage means (230) is transferred to the video content storage means (220).

**7.** One or more computer-readable media having computer readable instructions thereon which, when executed by one or more processors, cause the processor to implement the method according to claims 1-6.

**8.** Video recording device for providing video content to a user comprising:
- a video receiving means (211) for accessing video content from a video content source (260),
- a video content storage means (220) for storing a selected video content, and
- an internet access means (212) for accessing a central storage means (230),
wherein a user input means (213) is adapted to select video content being receivable from the video content source (260), and
wherein said central storage means (230) comprises an internet access means (231) for accessing the video content storage means (220), said central storage means (230) is accessible by a computer client (240) and said central storage means (230) is adapted to store the selected video content;
wherein the video recording device (210) and the central storage means (230) are adapted to store the selected video content in parallel.

**9.** Video recording device according to claim 8,
wherein the video receiving means (211) is a DVB receiver, in particular a DVB-T receiver, DVB-C receiver and/or DVB-S receiver, or an internet access means.

**10.** Video recording device according to claims 8 or 9,
wherein the video recording device (210) is an integral part of a computer client or a set-top box.

**11.** Video recording device according to any of the preceding claims 8-10,
wherein the computer client (240) is a desktop personal computer, tablet personal computer, a smart phone or a notebook computer.

**12.** Video recording device according to any of the preceding claims 8-11,
wherein the user input means (213) is part of the video recording device (210) or the user input means is a website (270) being accessible by a computer and/or mobile client.

**13.** Video recording device according to any of the preceding claims 8-12,
wherein the central storage means (230) is a network based server, particularly a web server.

**14.** Video recording device according to any of the preceding claims 8-13,
wherein the video recording device (210) and the central storage means (230) are adapted to store additional information concerning the stored selected video content, in particular information on free storage space, booking information, recording information, information on bookmarked selected video content, information on user preferences, information on user behavior, and information on deletion of recordings and bookings.

**15.** Video recording device according to claim 14,
wherein the video recording device (210) is adapted to transfer a modification of the additional information stored in the video recording device (210) to the central storage means (230) and
wherein the central storage means (230) is adapted to transfer a modification in the additional information stored in the central storage means (230) to the video recording device (210).

**16.** System for providing video content to a user comprising:
- a video recording device (210) comprising
o a video receiving means (211) for accessing video content from a video content source (260),
o a video content storage means (220) for storing a selected video content, and
o an internet access means (212) for accessing a central storage means (230), and
- a user input means (212) for selecting video content being receivable from the video content source (260),
- wherein said central storage means (230) comprises an internet access means (231) for accessing the video content storage means (220), said central storage means (230) is accessible by a computer client (240), in particular via an internet connection (241), and said central storage means (230) is adapted to store the selected video content;
wherein the video recording device (210) and the central storage means (230) are adapted to store the selected video content in parallel.
